# EUROPEAN PATENT SPECIFICATION

(11) **EP 3 187 044 B1**
(45) Date of publication and mention of the grant of the patent: **09.01.2019**
(21) Application number: 16203625.5
(22) Date of filing: 13.12.2016
(51) Int. Cl.: A01M 1/20

(54) **INSECT TRAP WITH BAIT**
INSEKTENFALLE MIT KÖDER
PIÈGE À INSECTES AVEC APPÂT

(30) Priority: 23.12.2015 ES 201531886
(43) Date of publication of application: 05.07.2017
(73) Proprietor: Zyxtudio diseño e innovación SL, 46003 Valencia (ES)
(72) Inventor: BLASCO FEO, VICENTE, 46003 VALENCIA (ES)
(74) Representative: Soler Lerma, Santiago

(56) References cited:
- US-A1- 2004 068 918
- US-A1- 2005 000 147
- US-B1- 6 272 791
- US-B1- 6 343 434

## Description

As its name indicates, the present invention relates to an insect trap with bait, which has shown the greatest efficacy for ants, although it can be used to control other types of insects.

The trap comprises a box containing the bait, with several orifices connecting the inside and the outside of the box and allowing the insects to enter and leave.

These orifices are arranged peripherally and preferably at an angle of 120º from each other.

Inside the box is a peripheral passage and an area with cells that houses the bait.

### BACKGROUND

Traps are known that comprise a box containing the bait and provided with a number of orifices through which the insects, attracted by the bait, enter the box and in general, after eating the bait, leave the box and return to their shelter where they occasionally share the poison in the bait with other insects of their kind.

In this type of traps it is essential that the bait cannot be accessed accidentally, for example by children, and that the bait does not flow out of the box.

Another goal is obtaining good ventilation so that the smell of the bait spreads and attracts a greater number of insects, while at the same time providing a robust box that is resistant and secure in case of accidental impact.

Another matter to consider is that the trap must remain closed until the consumer decides to use it.

Several devices are known, the most used of which are those with a base having several topographical features used to direct the insect towards the bait, and a cover over said base to create a closed feeding station.

Typical examples of traps of this type are disclosed in documents US4563836, by Woodruff or US4837969, by Demarest.

The base of each of the traps disclosed in the aforementioned documents is formed from a single piece of plastic material in the form of a film or relatively thin sheet, deformable, that uses walls or passages formed whole with the base to lead the insects to the bait while a cover closes the assembly on the top without obstructing the passages for the insects.

In both patents the bait is in a central internal position, housed in a vat that contributes to keeping it in place if the trap is moved, as well as hindering involuntary access such as by a child.

In document US4563836, by Woodruff, the cover rests only on the walls and has limited capacity to bear upper loads, presenting a substantial risk of crushing.

In the document by Demarest, the base includes several support features that extend upward, while the cover also provides the outer side walls of the trap, such that the cover is a casing that fits downward on the underlying supporting structures of the base and interacts with them.

The access doors through which the insects enter the traps by Demarest are not formed as gaps in or between the walls that rise from a base, but instead are orifices or openings formed in the part of the cover that constitutes the casing, thereby providing a robustness to the assembly that can withstand certain loads on the top thereof without being crushed; however, to maintain this robustness the insect access and exit locations are limited exclusively to said orifices, the size of which is limited to prevent affecting the strength of the assembly.

The proper functioning of the baited trap requires the bait to remain in the central position during use.

Patent US4793093 by Gentile discloses a solution for keeping the bait in the central vat.

This patent describes a trap made of a thin plastic material that has a base with a central well in which to house the bait and a cover including a member shaped as an inverted cup, which protrudes inward against the upper surface of the bait to help keep the latter in the central well.

However, the inverted cup member does not provide resistance against crushing, as it rests directly on the bait in the well.

Instead, resistance against crushing is provided by the side walls, which rest on the upper surface of a peripheral wall formed by the base.

Close to the approach of the present invention as regards configuration, although not use, is Spanish patent ES2184979T3 which proposes grooves on the base, which are filled with the liquid bait that falls from an upper container when the latter breaks upon deformation of the box. This system requires a liquid bait to flow properly and an easily deformable box, which means that it will be structurally weaker and therefore less safe.

A further example of an insect trap is described in US 2004/068918.

### DESCRIPTION OF THE INVENTION

The subject matter of the invention is a trap that is especially effective for ants but can be used for other insects, fulfilling the following goals:
1. A safe trap, such that it is impossible to reach the bait accidentally. This is provided by:
   a. The outer shape, which prevents introducing fingers
   b. The inner shape, with the bait well divided into cells, which prevents the bait from flowing outward
   c. The union of the support and cover, which is solid and prevents their separation.
   d. The structure of the trap, making it resistant to impact and pressure.
2. An effective trap with:
   a. A high attraction capability, achieved by the arrangement of the openings that allow air currents to enter and the bait to be dispersed.
   b. Easy access of insects into the trap, due to the size of the openings.
   c. Easy access of insects to the bait once inside the trap, due to the peripheral passage and walkways formed by the cells.
   d. Easy exit of the insects after eating the bait, due to the openings.

The present invention relates to an insect trap, preferably for ants, comprising a box with a bait inside it wherein said box comprises a support and a cover.

The support comprises an inner bath, peripheral walls and an outer tab.

The inner bath, meant to house the bait, is compartmentalised into cells and surrounded by a peripheral passage.

The size of the cells and the width and depth thereof will depend on the rheology of the bait such that the latter does not flow out of the cells if the trap position is changed, even for extended periods.

Thus, the division into cells prevents the bait from flowing out of the trap due to its rheological properties, while favouring access of insects to the bait, since the edges of the cells form walkways that facilitate access of the insects to the bait, particularly insects with social behaviour that leads to shared actions.

Consequently, the size and shape of the bait is related through the appropriate algorithm with the rheology of the bait.

The peripheral passage also facilitates access of insects to the various areas of the bait.

The peripheral walls surround the bath and present a number of recesses, preferably three equidistant from each other, as well as protrusions on the upper part thereof.

The tab protrudes out of the base of the support.

The frustoconical cover has a closed upper base, a peripheral flange, and an open base.

The flange has a number of cut-outs, coinciding in number and arrangement with those of the peripheral wall of the support.

The inner wall of the cover has a shape allowing to house the support and to be attached to it by pressure.

A tab protrudes outward from the flange

The cover and support are coaxial and the union of the two by pressure enables certain rotation motion with respect to each other.

For transport and storage purposes, the trap cover is at a position with respect to the support in which the tabs and cut-outs do not coincide.

In order to use the trap, the cover is placed such that the tabs and cut-outs coincide.

When in the use position the rotating movement of the cover with respect to the support is blocked, for example by using a clip mechanism.

### BRIEF DESCRIPTION OF THE DRAWINGS

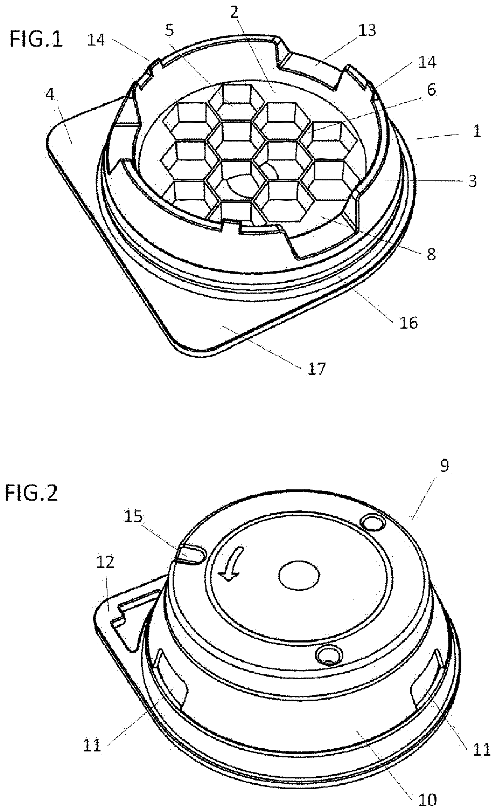

FIGURE 1 shows the support (1) showing the inner bath (2), the peripheral walls (3), the closing tab (4) and the opening tab (17).
   The bath comprises the cells (5) for the bait, the walkways (6) formed between these and the peripheral passage (8).
   In the peripheral walls (3) one can appreciate the cut-outs of the support (13) and stops (14) that delimit the relative rotation between the cover and the support.
   The peripheral walls also comprise on the outer part thereof a relief (16) that surrounds them and allows joining the cover and support by pressure, such that a certain rotation of one with respect to the other is possible.
FIGURE 2 shows the cover (9) where the flange (10) thereof shows the cut-outs of the cover (11) and on the outer side of the peripheral edge a tab of the cover (12) can be seen.
   Also visible is a recess (15) that is deep enough to bump against the protrusions present in the support.

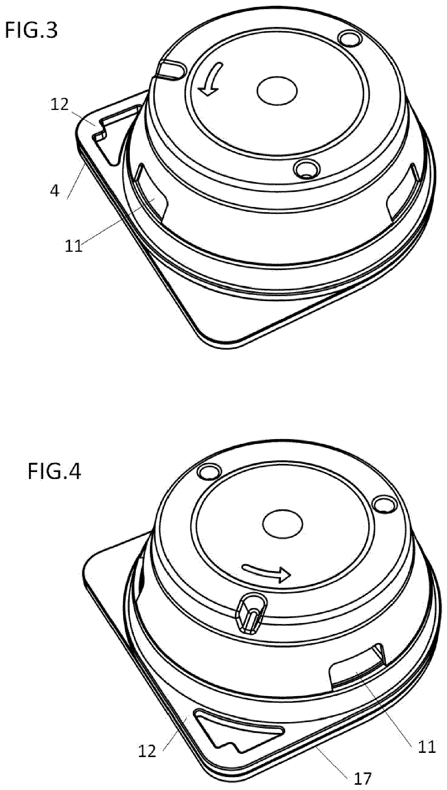

FIGURE 3 shows the device in the transport and storage position, with the cut-outs of the cover (11) covered as they do not coincide with the cut-outs of the support, and the tab of the cover (12) on the closing tab (4).
FIGURE 4 shows the device in the use position, with the cover cut-outs (11) free since they coincide with the flange cut-outs, the cover tab (12) being on the opening tab (17).

### DESCRIPTION OF AN EMBODIMENT OF THE INVENTION

A non-limiting embodiment of the invention is described below for illustration purposes only. The trap with bait proposed comprises two clearly differentiated elements, the support and the cover.

The support (1) meant to be on the bottom of the device also comprises a bath (2) in which the bait is housed with a peripheral wall (3).

The bath (2) is compartmentalised into a number of cells (5), in this case hexagonal, adjacent to each other such that the partitions separating them configure walkways (6) that allow insects to move along them, thereby providing improved access to the bait.

The bath (2) has a peripheral passage (8) to allow the insects, even if they all access through the same place, to spread around the inside of the trap and have easy access to the bait. Another part of the support is the peripheral wall (3), which is provided with a number of cut-outs (13) and stops (14).

Lastly, the support comprises two tabs that protrude out of the perimeter thereof, a closing tab (4) and an opening tab (17), one or the other overlapping the tab of the cover (12) depending on whether the device is open or closed for use.

The cover comprises the upper base, closed, and a flange (10) that presents a number of cut-outs (11) coinciding in number and arranged peripherally identically to the cut-outs of the support (13).

On the outer part of the peripheral wall, the support presents a relief (16) that surrounds it and allows pressure coupling of the same in a groove provided on the inner face of the flange of the cover, such that the support and the cover are coupled by pressure while allowing a rotation of one with respect to the other as they are coaxial.

During transport and storage, the closing tab (4) and the cover tab (12) overlap and the support cut-outs (13) and cover cut-outs (11) do not coincide, such that entry into the device is obstructed.

A small rotation of the cover with respect to the base until the cover tab (12) overlaps the opening tab will free access to the inside of the device, communicating the inside and the outside of the device as the cut-outs of the cover (11) and support (13) will coincide.

To prevent an accidental rotation of the cover or support while in use from reducing the effectiveness of the device, clip systems are provided to block the rotation when the device is in the use position.

## Claims

1. INSECT TRAP WITH BAIT of the type comprising a box inside which is the bait, where the box has a number of orifices allowing access to the bait, The box comprises a support (1) and a cover (9) where:
The support comprises a bath (2) compartmentalised into a plurality of cells and with a number of walkways (7) between the cells, a peripheral wall (3), at least one cut-out (13) in the peripheral wall.
The cover comprises a closed upper base and a peripheral flange (10), **characterised in that**:
The peripheral wall (3) of the cover is provided with stops (14),
The support comprises at least one tab (4, 17) that protrudes out of the perimeter thereof,
The peripheral flange (10) of the cover has at least one cut-out (11) and at least one tab of the cover (12) on the perimeter.

2. INSECT TRAP WITH BAIT according to claim 1 **characterised in that** the support and the cover are coaxial and present a rotating movement with respect to each other

3. INSECT TRAP WITH BAIT according to claim 1 **characterised in that** the bath comprises a peripheral passage (8).

4. INSECT TRAP WITH BAIT according to claim 1 **characterised in that** the cut-outs of the support (13) and the cut-outs of the flange (11) are peripheral, identical in number and arranged in the same manner, such that in the use position they coincide, communicating the inside and outside of the device.

5. INSECT TRAP WITH BAIT according to claim 1 **characterised in that** the support presents three cut-outs all of which are arranged peripherally and equidistant from each other, while the cover has three cut-outs in its flange, equidistant from each other.

6. INSECT TRAP WITH BAIT according to claim 1 **characterised in that** the support comprises two tabs, a closing tab (4) and an opening tab (17).

7. INSECT TRAP WITH BAIT according to claim 2 **characterised in that** the support and the cover comprise elements for blocking the rotating movement.

8. INSECT TRAP WITH BAIT according to claim 1 **characterised in that** the size and shape of the cells are related by an algorithm with the rheology of the bait.

## Patentansprüche

1. INSEKTENFALLE MIT KÖDER, die einen Behälter umfasst, in dem sich der Köder befindet, wobei der Behälter eine Anzahl von Öffnungen aufweist, die den Zugang zu dem Köder ermöglichen, wobei der Behälter einen Träger (1) und eine Abdeckung (9) umfasst, wobei:
Der Träger eine Wanne (2), die in eine Vielzahl von Zellen unterteilt ist, und mit einer Anzahl von Durchgängen (7) zwischen den Zellen, eine Umfangswand (3), mindestens eine Aussparung (13) in der Umfangswand umfasst.
Die Abdeckung umfasst eine geschlossene obere Basis und einen Umfangsflansch (10), **dadurch gekennzeichnet, dass**:
Die Umfangswand (3) der Abdeckung mit Anschlägen (14) versehen ist,
der Träger mindestens eine Lasche (4, 17) umfasst, die aus dessen Umfang hervorsteht,
der Umfangsflansch (10) der Abdeckung mindestens eine Aussparung (11) und mindestens eine Lasche der Abdeckung (12) auf dem Umfang aufweist.

2. INSEKTENFALLE MIT KÖDER nach Anspruch 1, **dadurch gekennzeichnet, dass** der Träger und die Abdeckung koaxial sind und in Bezug zueinander eine Drehbewegung aufweisen.

3. INSEKTENFALLE MIT KÖDER nach Anspruch 1, **dadurch gekennzeichnet, dass** die Wanne einen Umfangsdurchlass (8) umfasst.

4. INSEKTENFALLE MIT KÖDER nach Anspruch 1, **dadurch gekennzeichnet, dass** die Aussparungen des Trägers (13) und die Aussparungen des Flansches (11) am Umfang liegen, in der gleichen Anzahl und in der gleichen Weise angeordnet sind, so dass sie in der Verwendungsposition zusammenfallen und das Innere und Äußere der Vorrichtung verbinden.

5. INSEKTENFALLE MIT KÖDER nach Anspruch 1, **dadurch gekennzeichnet, dass** der Träger drei Aussparungen aufweist, die alle am Umfang und gleich voneinander beabstandet angeordnet sind, während die Abdeckung in ihrem Flansch drei gleich voneinander beabstandete Aussparungen aufweist.

6. INSEKTENFALLE MIT KÖDER nach Anspruch 1, **dadurch gekennzeichnet, dass** der Träger zwei Laschen, eine Verschlusslasche (4) und eine Öffnungslasche (17) umfasst.

7. INSEKTENFALLE MIT KÖDER nach Anspruch 2, **dadurch gekennzeichnet, dass** der Träger und die Abdeckung Elemente zum Blockieren der Drehbewegung umfassen.

8. INSEKTENFALLE MIT KÖDER nach Anspruch 1 **dadurch gekennzeichnet, dass** die Größe und Form der Zellen durch einen Algorithmus mit der Rheologie des Köders verknüpft sind.

## Revendications

1. Piège à insectes avec appât du type comprenant une boîte à l'intérieur de laquelle se trouve l'appât, la boîte comportant un certain nombre d'orifices permettant d'accéder à l'appât, la boîte comprenant un support (1) et un couvercle (9), dans lequel :
Le support comprend un bain (2) compartimenté en une pluralité de cellules et doté d'un certain nombre de galeries (7) entre les cellules, une paroi périphérique (3), au moins une découpe (13) dans la paroi périphérique.
Le couvercle comprend une base supérieure fermée et une bride périphérique (10), **caractérisé en ce que** :
La paroi périphérique (3) du couvercle est dotée de butées (14),
Le support comprend au moins une languette (4, 17) qui dépasse du périmètre de celui-ci,
La bride périphérique (10) du couvercle comporte au moins une découpe (11) et au moins une languette du couvercle (12) sur le périmètre.

2. Piège à insectes avec appât selon la revendication 1 **caractérisé en ce que** le support et le couvercle sont coaxiaux et présentent un mouvement rotatif l'un par rapport à l'autre.

3. Piège à insectes avec appât selon la revendication 1 **caractérisé en ce que** le bain comprend un passage périphérique (8).

4. Piège à insectes avec appât selon la revendication 1 **caractérisé en ce que** les découpes du support (13) et les découpes de la bride (11) sont périphériques, identiques en nombre et agencées de la même manière, de sorte qu'en position d'utilisation elles coïncident, faisant communiquer l'intérieur et l'extérieur du dispositif.

5. Piège à insectes avec appât selon la revendication 1 **caractérisé en ce que** le support présente trois découpes qui sont toutes agencées en périphérie et équidistantes entre elles, pendant que le couvercle présente trois découpes dans sa bride, équidistantes entre elles.

6. Piège à insectes avec appât selon la revendication 1 **caractérisé en ce que** le support comprend deux languettes, une languette de fermeture (4) et une languette d'ouverture (17).

7. Piège à insectes avec appât selon la revendication 2 **caractérisé en ce que** le support et le couvercle comprennent des éléments permettant de bloquer le mouvement de rotation.

8. Piège à insectes avec appât selon la revendication 1 **caractérisé en ce que** la taille et la forme des cellules sont liées par un algorithme à la rhéologie de l'appât.
